# EUROPÄISCHE PATENTSCHRIFT

(11) **EP 1 975 006 B1**
(45) Veröffentlichungstag und Bekanntmachung des Hinweises auf die Patenterteilung: **18.01.2012**
(21) Anmeldenummer: 07024096.5
(22) Anmeldetag: 12.12.2007
(51) Int. Cl.: B60R 13/08, B62D 29/00, B62D 25/04, B29C 44/18, G10K 11/16

(54) **Schalldämmendes Schottteil zum Abdichten eines Hohlraumes**
Sound-absorbing partition for sealing a cavity
Elément de cloison isolant destiné à étanchéifier un espace creux

(30) Priorität: 28.03.2007 DE 102007015394
(43) Veröffentlichungstag der Anmeldung: 01.10.2008
(73) Patentinhaber: Henkel AG & Co. KGaA, 40589 Düsseldorf (DE)
(72) Erfinder: Kochert, Stefan, 68799 Reilingen (DE); Stiller, Andreas, 69115 Heidelberg (DE)

(56) Entgegenhaltungen:
- WO-A-01/19667
- WO-A-01/83206
- WO-A-01/92063
- JP-A- 2001 030 252
- US-A- 5 766 719

## Beschreibung

Die vorliegende Erfindung betrifft akustisch wirkende und abdichtende Schottteile, insbesondere zum Abdichten von Hohlräumen von strukturellen Bauteilen sowie ein Verfahren zu ihrer Herstellung.

Moderne Fahrzeugkonzepte und Fahrzeugkonstruktionen weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies betrifft insbesondere auch auf moderne selbsttragende Karosseriekonstruktionen zu, bei denen Rahmenkonstruktion oder auch so genannte "space frames" eingesetzt werden. Derartige Konstruktionen weisen systembedingt eine Reihe von Hohlräumen auf, die gegen das Eindringen von Feuchtigkeit und Verschmutzungen abgedichtet werden müssen. Da diese Hohlräume außerdem Luftschall in Form von unangenehmen Fahrzeuglauf- und Windgeräuschen weiterleiten, dienen derartige Abdichtmaßnahmen auch zur Minderung der Geräusche und damit zur Erhöhung des Fahrkomforts im Fahrzeug. Bei herkömmlicher Bauweise werden diese Hohlräume enthaltenden Rahmen- und Karosserieteile aus halbschaligen Bauteilen vorgefertigt, die zu einem späteren Zeitpunkt durch Schweißen, Bördeln und/oder Kleben zu dem geschlossenen Hohlprofil gefügt werden. Bei derartiger Bauweise ist der Hohlraum im frühen Aufbauzustand einer Fahrzeugkarosserie also leicht zugänglich, so dass abdichtende und akustisch dämpfende Schottteile in dieser frühen Phase des Rohbaus durch mechanisches Einhängen, durch Einstecken in entsprechende Haltevorrichtungen, Bohrungen oder durch Anschweißen fixiert werden können.

Schottteile, die eine abdichtende und/oder akustische Wirkung in derartigen Hohlräumen bewirken, werden im angelsächsischen Sprachgebrauch auch "pillar filler" oder "baffles" oder auch "acoustic baffles" genannt. Sie bestehen in der Regel entweder vollständig aus thermisch expandierbaren Formkörpern oder sehr häufig aus Formkörpern, die einen Träger und in ihrem Peripheriebereich expandierbare polymere Bindemittel enthalten. Diese Schottteile werden dann im Rohbau durch Einhängen, Einclipsen, Verschrauben oder Anschweißen an den zu diesem Zeitpunkt noch offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung (KTL bzw. E-coat) ausgenutzt, um die Expansion des expandierbaren Teils des Schottteils auszulösen um somit den Querschnitt des Hohlraums abzudichten.

In WO 00/03894 A1 wird ein leichtes expandierbares Schottteil zum Abdichten eines Hohlraumes einer Fahrzeugkarosserie an einer vorbestimmten Stelle des Hohlraumes beschrieben. Dieses Schottteil umfasst eine steife Trägerplatte mit einem an der äußeren Peripherie angebrachten expandierbaren Abdichtungsmaterial. Die Abmessungen des Schottteils korrespondieren zu der Querschnittsöffnung des Hohlraumes, sind jedoch geringer als diese. Das expandierbare Abdichtungsmaterial hat eine Aktivierungstemperatur für die Expansion, die niedriger ist als die Schmelztemperatur des Materials der Trägerplatte. Bei der Aktivierung expandiert das expandierbare Abdichtungsmaterial radial von der steifen Trägerplatte und füllt so den Querschnitt des Hohlraums zwischen der steifen Trägerplatte und den Hohlraumwänden.

Die gattungsbildende WO 01/83206 beschreibt ein Schottteil zur Verwendung in dem Hohlraum eines strukturellen Bauteils einer Fahrzeugkarosse zur Dämpfung von akustischen Schallwellen und zur Versteifung des Bauteils quer zur Längsachse des strukturellen Bauteils. Das Schottteil besteht dabei aus einem Kunststoffträger mit einem Randbereich. In dem Randbereich ist ein kontinuierliches Band eines expandierbaren Materials angeordnet. Weiterhin soll der Träger ein Fixierungsmittel in Form eines Clips aufweisen, der in die dafür vorgesehenen Löcher in der Wandung des strukturellen Bauteils gesteckt werden soll.

Aus WO 03/004314 A1 ist eine Schalldämmungsvorrichtung bekannt, die in ein röhrenförmiges Teil, insbesondere ein Fahrzeugkarosserieteil eingesetzt werden kann. Diese Schalldämmungsvorrichtung, die einen Unterteilungseinsatz und einen Strang aus einer durch Wärme ausdehnbaren Zusammensetzung zur Bildung eines Schaums umfasst, wobei dieser Strang an den Umfang des Einsatzes angesetzt ist. Die Vorrichtung umfasst ferner Mittel zum Halten des Strangs an dem Einsatz vor der Ausdehnung des Strangs, sowie Mittel zur bevorzugten Ausdehnung des Strangs in Richtung auf die Innenwand des röhrenförmigen Teils. Es wird vorgeschlagen, dass der Strang durch Extrudieren und geradlinig ohne besondere Formung hergestellt wird, wobei die den Strang haltenden Mittel aus einem Stück mit dem Unterteilungseinsatz gegossen werden und auch die Formung des extrudierten Strangs an dem Umfang des Unterteilungseinsatzes sicherstellen sollen. Der ausdehnbare Strang soll einen variablen Quellungsgrad aufweisen, welcher in Abhängigkeit von dem zwischen dem Einsatz und der Innenwand des röhrenförmigen Teils zu füllenden Raum gewählt wird. Vorzugsweise soll der ausdehnbare Strang eine Zusammensetzung aus vulkanisierbarem synthetischem Kautschuk vom Typ Butyl, Halogenbutyl oder Nitril, beispielsweise aus Polychloropren oder aus EPDM sein.

JP2004-252169A offenbart eine Abdichtungsvorrichtung für Hohlkörperstrukturen mit kompliziertem Querschnitt. Die Vorrichtung umfasst eine erste Halteplatte, deren Form dem Querschnitt der Hohlkörperstruktur entspricht und eine zweite Halteplatte, die ein schäumbares Material zwischen sich und der ersten Platte hält. Nur die eine Seitenfläche des schäumbaren Materials wird dabei durch die erste Platte ungefähr im mittleren Bereich des Hohlkörpers gehalten. Dabei werden beide Seitenflächen des schäumbaren Materials in einer vorspringenden Region zwischen den beiden Platten gehalten. Besagter Vorsprung befindet sich im peripheren Rand des Hohlkörpers.

Während die oben genannten Schottteile bisher erfolgreich zum Abdichten der Hohlräume gegen das Eindringen von Staub, Wasser, Kohlenmonoxid und andere Schadstoffe sowie zur Geräuschdämmung eingesetzt wurden, besteht nach wie vor ein Bedarf an verbesserten Schottteilen mit der Fähigkeit zur Geräuschunterdrückung, welche durch möglichst einfache Herstellverfahren produziert werden können.

Solche abzudichtenden Hohlräume im Sinne dieser Erfindung sind beispielsweise die A-, B- oder C-Säule einer Automobilkarosserie, die die Dachstruktur tragen. Weitere abzudichtende Hohlräume sind Dachholmen oder Schweller sowie Teile der Radhäuser ("Kotflügel").

Angesichts dieses Standes der Technik haben sich die Erfinder die Aufgabe gestellt, Schottteile mit abdichtender und akustisch wirksamer Funktion bereitzustellen, die vorzugsweise im Spritzgussverfahren kostengünstig herstellbar sind.

Die erfindungsgemäße Lösung der Aufgabe ist den Patentansprüchen zu entnehmen. Sie besteht im wesentlichen in der Bereitstellung von Verbundwerkstücken aus einem Träger und einem thermisch expandierbarem Material, wobei der Träger eine zentrale Platte umfasst, an deren Rand umlaufend ein C-förmig bzw. U-förmig profilierter Kanal angeordnet ist, der an den gegenüberliegenden Seiten lateral zur Ebene der zentralen Platte versetzt ist.

In bevorzugten Ausführungsformen ist die zentrale Platte des Trägers im wesentlichen planar ausgebildet. Zur Erhöhung der Steifigkeit kann sie auch gewölbt oder abgestuft sein. In einem oder mehreren Randbereichen kann der Träger Befestigungsmittel aufweisen, die zur Fixierung des Schottteils an der Innenseite des abzudichtenden Hohlraums dienen. Beispiele für derartige Befestigungsmittel sind Clipse, so genannte push pins und dergleichen. Vorzugsweise sind diese Befestigungsmittel integraler Bestandteil des Trägers.

Erfindungsgemäß sind aus den vorgenannten Verbundwerkstücken thermisch expansionsfähige Schottteile ("baffle" oder "Pillar Filler") zum Abdichten eines Hohlraumes einer Fahrzeugkarosserie herstellbar.

Ein weiterer Gegenstand der vorliegenden Erfindung ist ein Verfahren zur Herstellung der thermisch expansionsfähigen Schottteile, bei dem zunächst der thermoplastischen Werkstoffs für den Träger senkrecht zur Entformungsrichtung der beweglichen Formhälften in die Spritzguss-Form injiziert wird, gefolgt vom Entformen des Trägers und nachfolgender Injektion des thermisch expandierbaren Materials in die C-förmigen Kanäle der Trägerplatte, worauf das Schottteil entformt wird.

Das Trägermaterial ist vorzugsweise aus thermoplastischen Kunststoffen geformt, wobei die thermoplastischen Kunststoffe gegebenenfalls faserverstärkt und / oder mit Füllstoffen versehen sein können. Bevorzugte thermoplastische Kunststoffe sind dabei Polyamide, Polyimide, Polyoxypropylen oder Polyethylenterephthalat, ganz besonders bevorzugt ist Polyamid 6.

Geeignete polymere Basisbindemittel für das thermisch expandierbare Material sind beispielsweise Ethylenvinylacetat-Copolymere (EVA), Copolymere des Ethylens mit (Meth)-acrylatestern, die gegebenenfalls noch anteilig (Meth)acrylsäure einpolymerisiert enthalten, statistische oder Blockcopolymere des Styrols mit Butadien oder Isopren oder deren Hydrierungsprodukte. Letztere können auch Triblockcopolymere vom Typ SBS, SIS oder deren Hydrierungsprodukte SEBS oder SEPS sein. Zusätzlich können die Bindemittel noch Vernetzer, Haftvermittler, klebrigmachende Harze ("tackifier"), Weichmacher sowie weitere Hilfs- und Zusatzstoffe wie z. B. niedermolekulare Oligomere enthalten. Zur Erzielung einer ausreichenden Treibfähigkeit und Expansionsfähigkeit enthalten diese polymeren Bindemittel noch Treibmittel. Als Treibmittel eignen sich im Prinzip alle bekannten Treibmittel wie z. B. die "chemischen Treibmittel" die durch Zersetzung Gase freisetzen oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Beispiele für die physikalischen Treibmittel sind expandierbare Kunststoffmikrohohlkugeln auf der Basis von Polyvinylidenchloridcopolymeren oder Acrylnitril/(Meth)acrylat-Copolymeren, wie sie z.B. unter den Namen "Dualite" bzw. "Expancel" von den Firmen Pierce & Stevens bzw. Casco Nobel im Handel erhältlich sind.

Das thermisch expandierbare Material umgibt dabei die Trägerplatte in der Regel vollständig und befindet sich in dem C- bzw. U-förmigen Kanal, wobei das thermisch expandierbare Material ggf. aus der offenen Seite des C- bzw. U-förmigen Kanals herausragen oder zurückstehen kann.

Einige besonders bevorzugte Ausführungsformen der Erfindung sollen nun anhand der Zeichnungen näher erläutert werden.

Es zeigen im einzelnen:
- Figur 1: Eine schematische Darstellung einer Fahrzeugkarosse
- Figur 2: Ein Schottteil gemäß Stand der Technik
- Figur 3: Eine weitere Ausführungsform eines Schottteils gemäß Stand der Technik
- Figur 4: ein erfindungsgemäßes Schottteil in einer schematischen Querschnittsansicht
- Figur 5: eine halbperspektivische Ansicht einer erfindungsgemäßen Ausführung eines Schottteils analog zu Fig. 4
- Figur 6: vordere Kante des Schottteils nach Fig. 5
- Figur 7: eine Ansicht auf eine seitliche Kante des Schottteils nach Fig. 5
- Figur 8: eine halbperspektivische Ansicht auf die zweite seitliche Kante des Schottteils nach Fig. 5
- Figur 9: eine halbperspektivische Ansicht auf die seitliche Kante des Schottteils nach Fig. 7
- Figur 10: eine halbperspektivische Ansicht eine weitere Ausführungsform des erfindungsgemäßen Schottteils

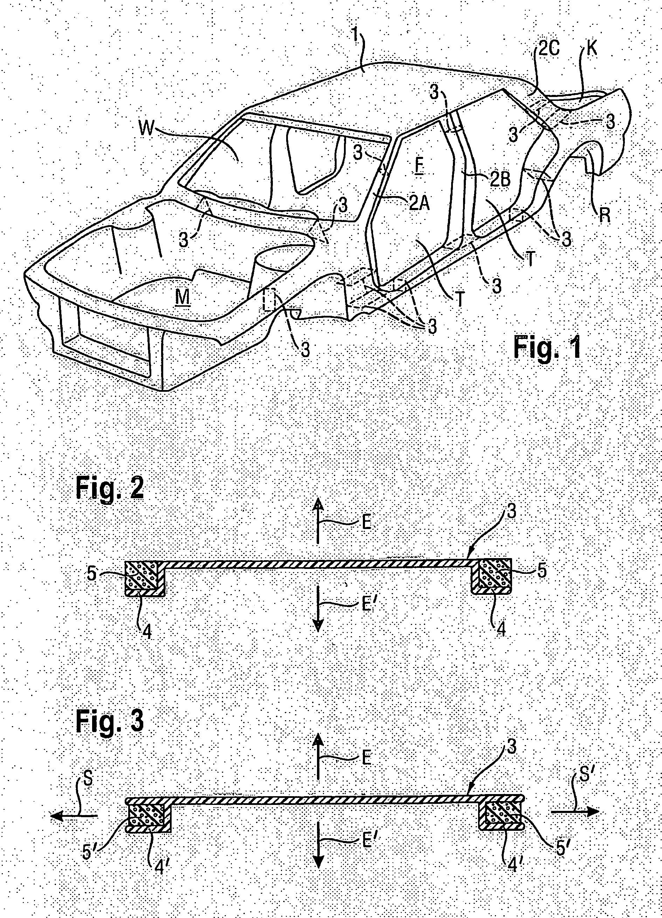

**Figur 1** zeigt eine schematische Darstellung einer Fahrzeugkarosserie in der abzudichtende Hohlräume ersichtlich sind. Es sind dies A-Säule (2A), B-Säule (2B), C-Säule (2C), der Schweller (unterhalb der Türöffnungen T), der Ansatz des hinteren Kotflügels (Radhaus R) sowie die vorderen Kotflügelbereiche (links und rechts vom Motorraum M) in die jeweils Schottteile (3) der vorgenannte Ausführungsformen eingebracht worden sind. Weiterhin sind in den Hohlprofilteil unterhalb der Windschutzscheibenöffnung (W) Schottteile (3) der vorgenannten Art verbaut worden.

In Figur 2 ist ein thermisch expansionsfähiges Schottteil (3) gemäß herkömmlichem Stand der Technik als Querschnitt dargestellt. An die zentrale planare Platte ist umlaufend ein L-förmiger Flansch integral angegossen, der das thermisch expandierbare und aufschäumbare Material (5) in Strangform aufnimmt. Derartige Schottteile lassen sich kostengünstig durch Spritzguss fertigen, wobei in einem ersten Schritt der gesamte Träger bestehend aus zentraler Platte und integral angefügtem L-förmigen Flansch durch Injektion eines thermoplastischen Werkstoffes in die Spritzgussform hergestellt wird. Die beiden Hälften der Spritzgussform werden bei der Entformung in Richtung der Pfeile E und E' auseinander gezogen. In einem zweiten Arbeitsschritt wird dann in einer zweiten geeigneten Spritzgussform das thermisch expandierbare Material (5) auf den L-förmigen Flansch (4) aufgegossen. Die Entformung findet auch in diesem zweiten Arbeitsschritt durch Auseinanderbewegen der Spritzgussformteile in Richtung der Pfeile E und E' senkrecht zur Ebene der zentralen Platte des Trägers des Schottteils statt. Diese Schottteile werden dann so in die abzudichtenden Hohlräume der Fahrzeugkarosserie eingebaut, dass die zentrale Ebene des Trägers senkrecht zur Längsachse des abzudichtenden Hohlraums angeordnet ist, so wie es in der Figur 1 schematisch dargestellt ist. Die Aktivierung und Expansion des expansionsfähigen Materials (5) erfolgt dann üblicherweise unter Ausnutzung der Prozesswärme des KTL-Ofens zur Aushärtung der kathodischen Tauchlackierung. Die Schottteile gemäß Figur 2 lassen sich zwar in einfacher Weise durch Spritzgussverfahren fertigen. Sie haben jedoch einen entscheidenden Nachteil: Während der Aktivierung durch die Erwärmung des Materials expandiert das thermisch expansionsfähige Material (5) nicht nur in der erwünschten radialen Richtung zum Abdichten des Zwischenraums zwischen Trägerplatte und Hohlraumwand sondern auch zu einem signifikanten Teil senkrecht zur Ebene der zentralen Trägerplatte auf der Seite, die bei dem L-förmigen Flansch (4) offen ist. Dieses bedeutet, dass diese unerwünschte Expansion bei der Bemessung des aufgebrachten expansionsfähigen Materials mit berücksichtigt werden muss.

Um diesem gravierenden Nachteil abzuhelfen, finden Schottteile gemäß der in Figur 3 dargestellten Bauform häufig Verwendung. Bei dieser Bauform ist im Randbereich kein L-förmiger Flansch angeformt, sondern ein C- bzw. U-förmiger Kanal (4'). Dieser C-förmige Kanal umschließt das thermisch expansionsfähige Material (5') an drei Seiten, so dass das thermisch expansionsfähige Material nur noch in die radiale Vorzugsrichtung expandieren kann. Die Fertigung derartiger Schottteile gemäß Figur 3 durch Spritzguss ist jedoch aufwändiger. Die Herstellung des Trägers mit angeformtem C- bzw. U-förmigem Flansch (4') kann nur dadurch erfolgen, dass die Spritzgussform bewegliche Schieber aufweist, die während des Einspritzens des Trägermaterials in die Form den Innenraum des C-bzw. U-förmigen Flansches einnehmen. Zum Entformen müssen diese Schieber in Richtung der Pfeile S bzw. S' so weit bewegt werden, dass nach Öffnen der Formhälften in Richtung der Pfeile E bzw. E' das Trägerteil aus der Form entnehmbar ist.

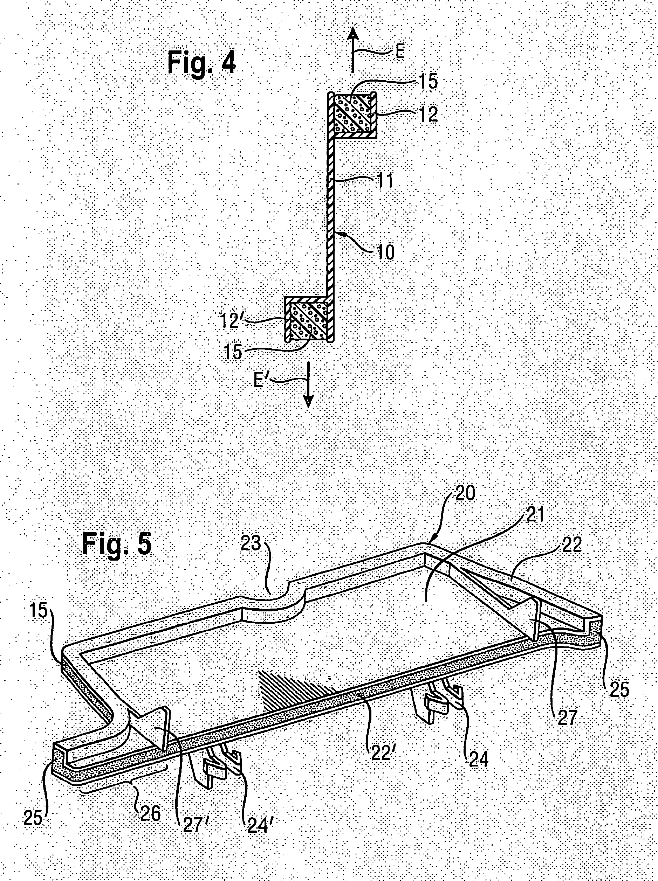

Figur 4 zeigt ein erfindungsgemäßes Schottteil in einer schematischen Querschnittsansicht. Der Träger (10) besteht dabei aus einer zentralen Platte (11), die erfindungsgemäß im wesentlichen planar ausgebildet ist. Sie kann in alternativen Ausführungsformen auch gewölbt oder abgestuft sein (in Figur 4 nicht dargestellt). Eine derartige Wölbung oder Abstufung der zentralen Platte kann erwünscht sein, um die Steifigkeit des Trägers für verbesserte mechanische Steifigkeit zu erhöhen oder auch verbesserte akustische Eigenschaften zu erzielen. Wesentlich für das erfindungsgemäße Schottteil ist die lateral zur Ebene der zentralen Platte versetzte Anordnung des C- bzw. U-förmigen Kanals (12, 12'). Der laterale Versatz der gegenüberliegenden Seiten der profilierten Kanäle erlaubt eine vereinfachte Gestaltung der Spritzgussformen derartig, dass die Formenhälften sich zum Öffnen und Schließen der Form in der Ebene des Trägers (E, E') bewegen lassen. Bewegliche Schieber zur Ausbildung der C- bzw. U-Form der Kanäle können .hierbei entfallen. Dieses reduziert die Werkzeugkosten der Spritzgussform erheblich. Dadurch, dass die Formen so ausgelegt sind, das die zentrale Ebene des Trägers (10) in Richtung der Bewegung der Formhälften E bzw. E' liegt, wirkt der Fülldruck während der Injektion des Thermoplasten in die Form überwiegend senkrecht zur Bewegungsrichtung der Formhälften. Dies erlaubt, verglichen mit der bisher üblichen Verfahrensweise, die Anordnung einer höheren Anzahl an Kavitäten in einer Spritzgussform, so dass in einem Arbeitsschritt mehr Teile gefertigt werden können. Auch hierdurch sind die Fertigungskosten der Schottteil-Träger signifikant günstiger gegenüber den Fertigungsverfahren des Standes der Technik.

In Figur 5 ist eine halbperspektivische Ansicht einer erfindungsgemäßen Ausführung eines Schottteils nach Figur 4 dargestellt. Sichtbar ist hier die zentrale Platte (21) des Schottteils (20) in vollständig planarer Ausführung. Der umlaufende Kanal (22) befindet sich im hinteren Teil der Figur auf der Oberseite der Trägerplatte und im vorderen Teil (22') auf der Unterseite der Trägerplatte. An den linken und rechten Übergangsseiten, an denen die lateral versetzten Kanäle (22) und (22') ineinander übergehen, befindet sich die Übergangszone des Kanals (25), die ein vergrößertes Volumenelement für das thermisch expandierbare Abdichtungsmaterial aufweist. Dieses vergrößerte Volumenelement kann dazu benutzt werden, um kritische scharfe Ecken in den Hohlräumen der Fahrzeugkarosserie mit Sicherheit vollständig und verlässlich auszufüllen. Dies gilt insbesondere für eine in Figur 5 dargestellte starke Verjüngung (26) der linken Seite des Schottteils (20). In bevorzugten Ausführungsformen können die erfindungsgemäßen Schottteile weiterhin als integralen Teil des Trägers verstärkende Stützvorrichtungen (27, 27') aufweisen. Weiterhin können integral an den Träger angeformte Clipse als Befestigungsmittel (24, 24') Bestandteil des erfindungsgemäßen Schottteils sein. Eine weitere erfindungsgemäße Ausgestaltung ist in diesem konkreten Fall die Einbuchtung (23) an der hinteren Längskante des Schottteils, die eine entsprechende Ausformung des abzudichtenden Hohlraums berücksichtigt.

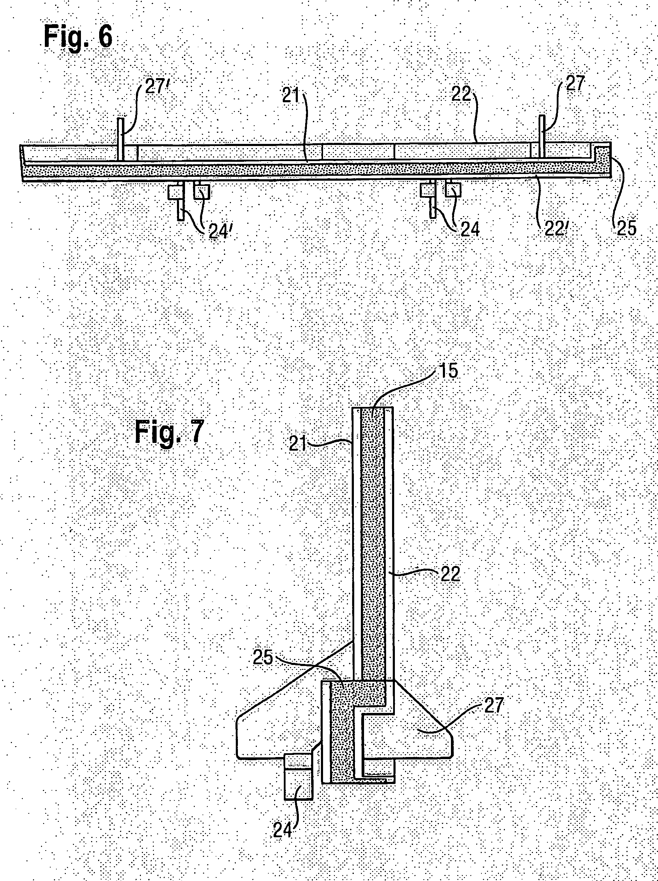

In Figur 6 ist ein Blick auf die vordere Kante des Schottteils nach Figur 5 dargestellt, sichtbar ist die zentrale Platte (21) mit dem oberhalb der Plattenebene befindlichen rückwärtigen Teil des C-förmigen Kanals (22), dem Übergangsbereich (25) zwischen dem rückwärtigen Teil des Kanals (22) und dem vorderen unterseitigen Teil des Kanals (22'). Ferner sind auf der Unterseite des Trägers die Aufsichten auf die Befestigungselemente (Clipse 24, 24') sowie die versteifenden Stützelemente (27, 27') sichtbar.

Figur 7 zeigt eine Aufsicht auf die rechte kurze Kante des Schottteils gemäß Figur 5. Hier ist wiederum die zentrale Trägerplatte (21) sowie, rechts davon angeordnet, die Aufsicht auf den mit dem expandierbaren Abdichtungsmaterial (15) gefüllten Kanal (22). Im unteren Bereich der Figur 7 ist rechts das versteifende Stützelement (27) und links der angeformte Befestigungsclip (24) sichtbar. Weiterhin ist der Übergangsbereich (25) im Bereich des lateralen Versatzes des umlaufenden C-förmigen Kanals dargestellt.

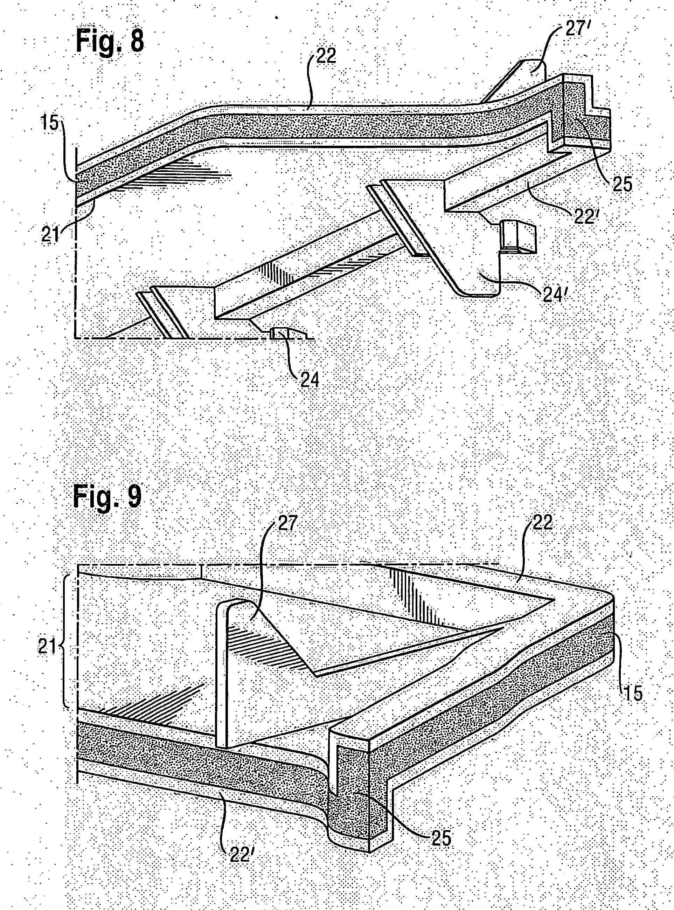

In Figur 8 ist ein halbperspektivischer Ausschnitt des Schottteils nach Figur 5 auf die linke schmale Kante sichtbar. Der Blick richtet sich auf die Unterseite der Trägerplatte (21) mit dem oben liegenden Blick auf die offene Seite des Kanals (22), der mit expandierbarem Material (15) gefüllt ist. Der auf die Unterseite versetzte Teil des Kanals (22') ist von seiner geschlossenen Rückseite sichtbar. Weiterhin ist im verjüngt auslaufenden Teil des lateralen Versatzes der Übergangsbereich (25) mit dem vergrößerten Volumenelement des expansionsfähigen Abdichtmaterials sichtbar. Auf der Oberseite ist ein Abschnitt des verstärkenden Stützelements (27') sichtbar und auf der Unterseite der Trägerplatte sind die angeformten Clipse (24', 24) ganz bzw. teilweise sichtbar.

Die Figur 9 zeigt den korrespondierenden halbperspektivischen Blick auf die rechte schmale Kante des Schottteils gemäß Figur 5. Sichtbar ist wiederum die zentrale Trägerplatte (21) mit der Rückseite des oben liegenden Teils des C-förmigen Kanals (22) in der rückwärtigen Ansicht sowie unterhalb der Trägerplatte die Aufsicht auf den lateral versetzten Teil des Kanal (22') mit dem Übergangsbereich (25) der beiden Kanalteile. Wiederum ist der Kanal mit expansionsfähigem Abdichtmaterial (15) gefüllt dargestellt. Ebenfalls sichtbar ist das versteifend wirkende Stützelement (27) auf der Oberseite der Trägerplatte.

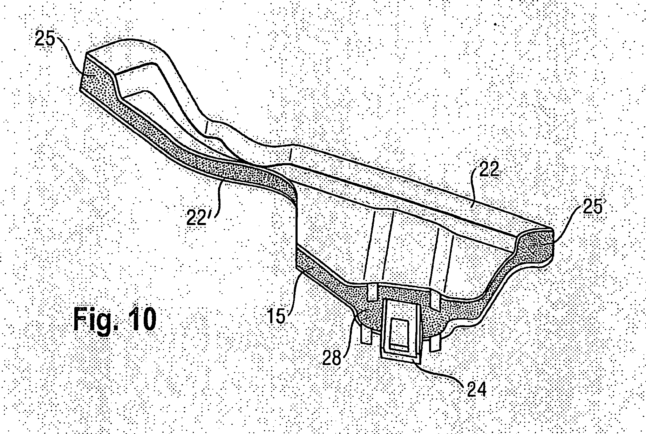

Figur 10 zeigt eine halbperspektivische Ansicht auf eine weitere Ausführungsform des erfindungsgemäßen Schottteils, bestehend wiederum aus der zentralen Trägerplatte (21) mit den jeweils oberhalb bzw. unterhalb der Trägerplattenebene lateral versetzten Kanalteilen (22, 22'), die mit expansionsfähigem Abdichtmaterial (15) gefüllt sind. Wiederum sind die linken und rechten Übergangsbereiche (25) des lateralen Versatzes sichtbar. Der integral angeformte Befestigungsclip (24) wird in diesem Fall vollständig von dem Kanal (22') umgeben, so dass auch der Befestigungsclip im Bereich (28) vollständig von expansionsfähigem Abdichtmaterial umgeben ist. Durch diese Ausführungsform wird sichergestellt, dass auch der Bohrungsbereich des Hohlraumes der Fahrzeugkarosserie, in den der Befestigungsclip (24) eingesetzt wird, vollständig mit expandierendem Abdichtmaterial abgedichtet wird.

Die Querschnittsform der erfindungsgemäßen Schottteile ist selbstverständlich im jeweiligen Anwendungsfall auf den Querschnitt des entsprechenden abzudichtenden Hohlraums (A-, B-, C-Säule, Schwellerteil, Kotflügelbereiche, Dachholm und dergleichen) angepasst. Dabei ist in der nicht expandierten und nicht ausgehärteten Anlieferungsform der Querschnitt des Schottteils plus thermisch expandierbarem Abdichtmaterial kleiner als die Querschnittöffnung des abzudichtenden Hohlraumelementes der Fahrzeugkarosserie. Durch diese Maßnahme ist sichergestellt, dass sämtliche Prozessflüssigkeiten in der Fertigung des Fahrzeuges wie Entfettungsmittel, Phosphatierungsmittel und KTL-Beschichtungsmaterial ungehindert durch die Hohlräume und Säulen der Fahrzeugkarosserie fließen können und die Innenwände dieser Hohlraumelemente vollständig benetzen können. Die thermisch expandierbare Polymerzusammensetzung wird dann im KTL-Ofen (manchmal auch "Rohbau-Ofen" genannt) aktiviert. Zu diesem Zeitpunkt expandiert das thermisch expandierbare bandförmige Abdichtungsmaterial radial aus dem C-förmigen Kanal des Schottteils, haftet fest und sicher an den Innenwänden der abzudichtenden Hohlraumelemente und härtet aus. Hierdurch wird besagtes Hohlraumelement der Fahrzeugkarosserie vollständig abgedichtet.

## Patentansprüche

1. Verbundwerkstück aus einem Träger (10) und einem thermisch expandierbarem Material (15), wobei der Träger eine zentrale Platte (11) umfasst, an deren Rand umlaufend ein C-förmig profilierter Kanal (12,12') angeordnet ist, der an den gegenüberliegenden Seiten lateral zur Ebene der zentralen Platte versetzt ist, **dadurch gekennzeichnet, dass** der C-förmig profilierte Kanal derart lateral zur Ebene der zentralen Platte versetzt ist, dass er sich in einem ersten skinteren Abschnitt des Randes auf der Oberseite der Trägerplatte und in einem zweiten, vorderen Abschnitt des Randes auf der Unterseite der Trägerplatte befindet.

2. Verbundwerkstück aus einem Träger und einem thermisch expandierbarem Material nach Anspruch 1, **dadurch gekennzeichnet, dass** der umlaufende Kanal eine Überganszone ausbildet, in welcher der auf der Oberseite der Trägerplatte befindliche Kanal und der auf der Unterseite der Trägerplatte befindliche Kanal an linken, bzw.rechten Übergangsseiten ineinander übergehen, wobei diese Übergangszone ein vergrößertes Volumenelement für das thermisch expandierbare Material aufweist.

3. Verbundwerkstück aus einem Träger und einem thermisch expandierbarem Material nach Anspruch 1 oder 2, **dadurch gekennzeichnet, dass** die zentrale Platte im wesentlichen planar, gewölbt oder abgestuft ausgebildet ist.

4. Verbundwerkstück nach einem der Ansprüche 1 bis 3, **dadurch gekennzeichnet, dass** das thermisch expandierbare Material in dem C-förmigen Kanal angeordnet ist.

5. Thermisch expansionsfähiges Schottteil ("baffle" oder "Pillar Filler") zum Abdichten eines Hohlraumes einer Fahrzeugkarosserie, herstellbar aus einem Verbundwerkstück nach einem der Ansprüche 1 bis 4.

6. Thermisch expansionsfähiges Schottteil nach Anspruch 5, **dadurch gekennzeichnet, dass** der Träger mindestens ein Befestigungselement zum Befestigen des Schottteils im Hohlraum des Fahrzeugs aufweist.

7. Thermisch expansionsfähiges Schottteil nach einem der Ansprüche 5 und 6, **dadurch gekennzeichnet, dass** der Träger aus einem thermoplastischen Werkstoff ist.

8. Thermisch expansionsfähiges Schottteil nach Anspruch 7, **dadurch gekennzeichnet, dass** der thermoplastische Werkstoff ausgewählt wird aus Polyamiden, Polyimiden, Polyoxypropylen oder Polyethylenterephthalat.

9. Thermisch expansionsfähiges Schottteil nach Anspruch 8, **dadurch gekennzeichnet, dass** das Polyamid ein Polyamid 6 ist.

10. Thermisch expansionsfähiges Schottteil nach einem der Ansprüche 5 bis 9 **dadurch gekennzeichnet, dass** das thermisch expandierbare Material mindestens ein Ethylen- Copolymer und ein Treibmittel enthält.

11. Verfahren zur Herstellung des thermisch expansionsfähigen Schottteils nach einem der Ansprüche 5 bis 10, **gekennzeichnet durch** die folgenden wesentlichen Verfahrensschritte:
(a) Injektion des thermoplastischen Werkstoffs für den Träger in die Spritzguss- Form, die bewegliche Formhälften aufweist, wobei die Form so ausgelegt ist, dass die zentrale Ebene des Trägers Richtung der Bewegung der Formhälften (E,E') liegt,
(b) Entformen des Trägers,
(c) nachfolgende Injektion des thermisch expandierbare Materials in die C-förmigen Kanäle,
(d) Entformen des Schottteils.

12. Verfahren nach Anspruch 11, **dadurch gekennzeichnet, dass** im Teilschritt (a) eine Spritzguss-Form verwendet wird, die keine beweglichen Schieber zur Ausbildung der C-bzw. U-Form der Kanäle aufweist.

## Claims

1. A composite workpiece comprising a carrier (10) and a thermally expansible material (15), the carrier comprising a central plate (11), around the edge of which there is arranged a channel (12, 12') of C-shaped profile, which is offset laterally on the opposing sides relative to the plane of the central plate, **characterised in that** the channel of C-shaped profile is offset laterally relative to the plane of the central plate in such a way that it is located in a first, rear portion of the edge on the top of the carrier plate and in a second, front portion of the edge on the bottom of the carrier plate.

2. A composite workpiece comprising a carrier and a thermally expansible material according to claim 1, **characterised in that** the peripheral channel forms a transition zone, in which the channel located on the top of the carrier plate and the channel located on the bottom of the carrier plate merge with one another at the left- or right-hand transition sides respectively, this transition zone comprising an enlarged volume element for the thermally expansible material.

3. A composite workpiece comprising a carrier and a thermally expansible material according to claim 1 or claim 2, **characterised in that** the central plate is of substantially planar, curved or stepped construction.

4. A composite workpiece according to any one of claims 1 to 3, **characterised in that** the thermally expansible material is arranged in the C-shaped channel.

5. A thermally expansible partition part ("baffle" or "pillar filler") for sealing a cavity in a vehicle body, which may be made from a composite workpiece according to any one of claims 1 to 4.

6. A thermally expansible partition part according to claim 5, **characterised in that** the carrier comprises at least one fastening element for fastening the partition part in the cavity of the vehicle.

7. A thermally expansible partition part according to either one of claims 5 and 6, **characterised in that** the carrier is made from a thermoplastic material.

8. A thermally expansible partition part according to claim 7, **characterised in that** the thermoplastic material is selected from polyamides, polyimides, polyoxypropylene or polyethylene terephthalate.

9. A thermally expansible partition part according to claim 8, **characterised in that** the polyamide is a polyamide 6.

10. A thermally expansible partition part according to any one of claims 5 to 9, **characterised in that** the thermally expansible material contains at least one ethylene copolymer and one blowing agent.

11. A method for producing the thermally expansible partition part according to any one of claims 5 to 10, **characterised by** the following essential method steps:
(a) injecting the thermoplastic material for the carrier into the injection mould, which comprises mobile mould halves, the mould being designed such that the central plane of the carrier lies in the direction of movement of the mould halves (E, E').
(b) demoulding the carrier,
(c) subsequently injecting the thermally expansible material into the C-shaped channels,
(d) demoulding the partition part.

12. A method according to claim 11, **characterised in that** in sub-step (a) an injection mould is used which does not comprise any mobile splits for forming the C- or U-shape of the channels.

## Revendications

1. Pièce à travailler composite formée d'un support (10) et d'un matériau (15) pouvant se dilater thermiquement, le support comprenant une plaque centrale (11) sur tout le pourtour de laquelle est situé un canal profilé en forme de C (12, 12') qui est décalé latéralement par rapport au plan de la plaque centrale sur les côtés opposés, **caractérisée en ce que** le canal profilé en forme de C est décalé latéralement par rapport au plan de la plaque centrale de telle sorte qu'il se trouve sur le côté supérieur de la plaque de support dans un premier tronçon, postérieur, du bord et sur le côté inférieur de la plaque de support dans un second tronçon, antérieur, du bord.

2. Pièce à travailler composite formée d'un support et d'un matériau pouvant se dilater thermiquement selon la revendication 1, **caractérisée en ce que** le canal périphérique forme une zone de transition dans laquelle le canal se trouvant sur le côté supérieur de la plaque de support et le canal se trouvant sur le côté inférieur de la plaque de support se confondent l'un dans l'autre sur des côtés de transition gauches resp. droits, cette zone de transition comportant un élément de volume agrandi pour le matériau pouvant se dilater thermiquement.

3. Pièce à travailler composite formée d'un support et d'un matériau pouvant se dilater thermiquement selon la revendication 1 ou 2, **caractérisée en ce que** la plaque centrale est d'exécution essentiellement plane, courbée ou étagée.

4. Pièce composite à travailler selon l'une des revendications 1 à 3, **caractérisée en ce que** le matériau pouvant se dilater thermiquement est situé dans le canal en forme de C.

5. Elément de cloison capable de se dilater thermiquement (*"baffle"* ou "*Pillar Filler"*) pour étanchéifier un espace creux d'une carrosserie de véhicule, pouvant être fabriqué à partir d'une pièce à travailler composite selon l'une des revendications 1 à 4.

6. Elément de cloison capable de se dilater thermiquement selon la revendication 5, **caractérisé en ce que** le support comprend au moins un élément de fixation pour fixer l'élément de cloison dans l'espace creux du véhicule automobile.

7. Elément de cloison capable de se dilater thermiquement selon l'une des revendications 5 et 6, **caractérisé en ce que** le support est fait d'une matière thermoplastique.

8. Elément de cloison capable de se dilater thermiquement selon la revendication 7, **caractérisé en ce que** la matière thermoplastique est choisie parmi des polyamides, des polyimides, des polyoxypropylènes ou le polyéthylène-téréphtalate.

9. Elément de cloison capable de se dilater thermiquement selon la revendication 8, **caractérisé en ce que** la polyamide est une polyamide 6.

10. Elément de cloison capable de se dilater thermiquement selon l'une des revendications 5 à 9, **caractérisé en ce que** le matériau pouvant se dilater thermiquement contient au moins un copolymère d'éthylène et un produit moussant.

11. Procédé de fabrication de l'élément de cloison pouvant se dilater thermiquement selon l'une des revendications 5 à 10, **caractérisé par** les étapes essentielles suivantes :
(a) injection de la matière thermoplastique pour le support dans le moule pour injection qui comprend des demi-moules mobiles, le moule étant conçu pour que le plan central du support soit situé dans la direction du mouvement des demi-moules (E, E'),
(b) démoulage du support, suivi de
(c) l'injection du matériau pouvant se dilater thermiquement dans les canaux en forme de C,
(d) démoulage de l'élément de cloison.

12. Procédé selon la revendication 11, **caractérisé en ce que** l'on utilise dans l'étape (a) un moule pour injection qui ne comporte aucun tiroir mobile pour la formation des canaux en forme de C resp. en forme de U.
